# EUROPEAN PATENT APPLICATION

(11) **EP 2 600 483 A2**
(43) Date of publication of application: **05.06.2013**
(21) Application number: 12193297.4
(22) Date of filing: 19.11.2012
(51) Int. Cl.: H02J 5/00, H02J 7/02, G06K 19/00

(54) **Mobile device, power supply platform, and power supply method for mobile device**

(30) Priority: 30.11.2011 JP 2011261724
(71) Applicant: SANYO ELECTRIC CO. LTD, Moriguchi-City, Osaka 570 (JP)
(72) Inventor: Tomiki, Masahiro, Moriguchi City, Osaka 570-8677 (JP); Yagi, Tatehito, Moriguchi City, Osaka 570-8677 (JP); Tanida, Yosuke, Moriguchi City, Osaka 570-8677 (JP)
(74) Representative: Hertz, Oliver

(57) **Abstract**

To reduce power consumption when a mobile device is not set down, and to reliably detect when a mobile device has been set down so that problems can be prevented such as overheating when a conductive object such as a coil is set down. A mobile device 1 is set down on a power supply platform 2, power is transmitted from a power transmission coil 5 of the power supply platform 2 to a power receiving coil 4 of the mobile device 1, and the power is supplied to the mobile device 1. The power supply platform 2 temporarily supplies alternating current power to the power transmission coil 5 for a predetermined period, detection signals such as the current of the power transmission coil 5 are detected while alternating current power is being supplied to the power transmission coil 5, ID signals transmitted from a mobile device 1 are detected when a set down mobile device 1 has been detected based on the level of the detection signals, alternating current power is supplied from the power transmission coil 5 to the power receiving coil 4, and the mobile device 1 is powered up.

## Description

### FIELD OF THE INVENTION

The present invention relates to a mobile device and a power supply platform, and to a power supply method for a mobile device in which a mobile device incorporating a power receiving coil induces power using a magnetic induction effect. The present invention relates more specifically to a mobile device and a power supply platform, and to a power supply method for a mobile device in which power is supplied to a particular mobile device as soon as the mobile device has been set down on a power supply platform.

### BACKGROUND OF THE INVENTION

A mobile device and a power supply platform have been developed in which the mobile device is placed on a power supply platform, and contact-free power is supplied from the power supply platform to the mobile device using a magnetic induction effect (see Patent Document 1). In this system, a battery is incorporated into the mobile device, and the battery in the mobile device is charged by the power transmitted from the power supply platform. The mobile device incorporating a battery is placed on top of the power supply platform serving as the charging platform, and contact-free charging is performed using a magnetic induction effect. In this mobile device and power supply platform, an ID signal is transmitted from the mobile device to the power supply platform serving as a charging platform, the power supply platform detects the ID signal, alternating current power is supplied to the power transmission coil in the power supply platform, the power is transferred from the power transmission coil to the power receiving coil in the mobile device using a magnetic induction effect, and the battery incorporated into the mobile device is charged.

For example, see Japanese Laid-open Patent Application No. 2010-16985.

### SUMMARY OF THE INVENTION

In a system in which a mobile device is detachably set down on a power supply platform to supply electric power from a power transmission coil in the power supply platform to a power receiving coil in the mobile device using a magnetic induction effect, the setting down of a mobile device on the power supply platform has to be detected before alternating current power is supplied to the power transmission coil. If alternating current power were to be supplied to the power transmission coil without a mobile device having first been set down on the power supply platform, electric power would be wasted and problems associated with generating an ambient alternating current magnetic field would occur. If a conductive object such as a coin were to be set down on the power supply platform, induced current would flow and the object would become hot. In order to prevent these problems, an ID signal transmitted from the mobile device is detected by the power supply platform before alternating current power is supplied to the power transmission coil. However, this system cannot determine when a mobile device has been set down on the power supply platform. Therefore, the power supply platform has to constantly attempt to detect ID signals from mobile devices to determine whether or not a mobile device has been set down. When the power supply platform has to detect whether or not a mobile device has been set down by continuously attempting to detect ID signals, power is wasted. The amount of power wasted can be reduced by attempting to detect ID signals periodically. In this system, power is conserved by performing the ID signal detection operation for a short period of time. In other words, the period of time in which ID signals are detected is short, and the period of time in which ID signals are not detected is long.

However, in mobile devices and power supply platforms of the prior art, predetermined ID signals are received, and the power supply platform determines whether or not the set down mobile device can be powered up normally by determining that the received ID signals are normal signals. Therefore, it takes time to determine whether or not a mobile device that can be powered up normally has been set down based on the ID signals, and it is difficult to reduce the average power consumption of the power supply platform when a mobile device has not been set down. In a circuit configuration which activates an ID signal transmission circuit in a mobile device using power transmitted from the power supply platform, there is a time lag in detecting ID signals after alternating current power has been transmitted by the power transmission coil, and the configuration needlessly consumes a large amount of power. In a system that transmits contact-free power using the magnetic induction effect, no power is transmitted when a mobile device has not been set down. Ideally, zero power is consumed in this state. However, in reality, zero power cannot be consumed because the setting down of mobile devices needs to be detected. Because a large number of power supply platforms for transmitting power to mobile devices are in use, it is very important to be able to minimize power consumption when a mobile device has not been set down.

The present invention was developed to solve this problem. The main purpose of the present invention is to provide a mobile device and power supply platform and to provide a power supply method for a mobile device which are able to reduce the amount of power consumed when a mobile device has not been set down, and to supply power to a mobile device as soon as the setting down of the mobile device has been detected while also saving a significant amount of energy. Another important purpose of the present invention is to be able to quickly determine when a mobile device that can be powered up normally has been set down and to be able to reliably determine when a conductive object other than a mobile device such as a coin has been set down in order to prevent overheating of conductive objects and eliminate the inappropriate supply of power.

The mobile device and power supply platform of the present invention are a mobile device 1 and a power supply platform 2 in which the mobile device 1 is removably set down on the power supply platform 2, and power is transmitted to the mobile device 1. The mobile device 1 has a power receiving coil 4 electromagnetically coupled to the power transmission coil to induce electric power, and a transmission circuit 7 for transmitting a stored ID to the power supply platform 2. The power supply platform 2 includes a case 8 having a platform section for detachably arranging the mobile device 1, a power transmission coil 5 installed in the case 8 and electromagnetically coupled to the power receiving coil 4 in the mobile device 1 set down on the platform section, an alternating current power source 10 for supplying alternating current power to the power transmission coil 5, a control circuit 9 for controlling the alternating current power source 10, a receiving circuit 11 for receiving a predetermined ID signal transmitted from the mobile device 1, and a detection circuit 12 for detecting current and/or voltage detection signals from the power transmission coil 5 while the alternating current power source 10 is temporarily supplying alternating current power to the power transmission coil 5 to determine whether or not a mobile device 1 has been placed on the platform section. The control circuit 9 supplies alternating current power to the power receiving coil 4 from the power transmission coil 5 to power up the mobile device 1 when the power supply platform 2 has detected a set down mobile device 1 using the detection circuit 12 and has detected a predetermined ID signal using the receiving circuit 11.

In the power supply method for supplying power to a mobile device, a mobile device 1 is set down on a power supply platform 2 and power is transmitted from a power transmission coil 5 in the power supply platform 2 to a power receiving coil 4 in the mobile device 1. This method includes temporarily supplying alternating current power from the power supply platform 2 to the power transmission coil 5 for a predetermined period, detecting current and/or voltage detection signals from the power transmission coil 5 while alternating current power is supplied to the power transmission coil 5, detecting ID signals transmitted from the mobile device 1 when a set down mobile device 1 is detected based on the signal level of the detection signals, and supplying alternating current power to the power transmission coil 5 to power up the mobile device 1 when the ID signals detect a set down mobile device 1.

In the mobile device, power supply platform, and power supply method for a mobile device, consumption of power when a mobile device has not been set down on the power supply platform is reduced, thereby achieving significant power savings. Also, a set down mobile device can be quickly detected and the mobile device powered up. Also, the setting down of a mobile device that can be powered up normally can be quickly determined, and the setting down of a conductive object other than a mobile device such as a coin can be determined, thereby preventing overheating of the conductive object and eliminating the inappropriate supply of power.

In the mobile device, power supply platform, and power supply method for a mobile device, the setting down of a mobile device is determined by detecting the ID signal transmitted from the mobile device as in the prior art. However, alternating current power is briefly supplied to the power transmission coil to detect a set down mobile device based on the current and voltage of the power transmission coil. The current and voltage of the power transmission coil vary depending on whether or not a mobile device has been set down. When a mobile device has been set down, the power transmission coil is electromagnetically coupled to the power receiving coil, and a load is connected to the power transmission coil. Therefore, the current of the power transmission coil is increased, and the voltage of the power transmission coil is decreased when a mobile device is set down. The current and voltage when alternating current power is being supplied to the power transmission coil vary depending on the conditions under which alternating current power is supplied to the power transmission coil. Therefore, the present invention can briefly supply alternating current power to the power transmission coil, and determine whether or not a mobile device has been set down. The current and voltage of the power transmission coil change not only when a mobile device is set down, but also when a conductive metal object such as a coin has been set down. Therefore, it can be determined whether the object set down on the power supply platform is a mobile device or a conductive object such as a coin based on the change in the current or voltage of the power transmission coil. In the present invention, it is determined whether or not the mobile device can be powered up normally by detecting the ID signal of the mobile device after it has been determined from the current and voltage of the power transmission coil that a mobile device has been set down. The ID signal does not always have to be detected. It can be limited to detecting whether a mobile device or other conductive object has been set down. Therefore, it is sufficient to detect whether a mobile device or conductive object has been set down by supplying alternating current power briefly to the power transmission coil at a regular time interval. This significantly reduces the amount of power required by the power supply platform until a mobile device has been set down.

In the mobile device and power supply platform of the present invention, a detection circuit 12 stores the setting range for detection signals indicating a set down mobile device, and determines whether or not a mobile device has been set down on the platform section using the setting range for detection signals. In the power supply method for a mobile device of the present invention, a set down mobile device 1 is detected when the current and/or voltage detection signals from the power transmission coil 5 are within a predetermined setting range.

In the mobile device, power supply platform, and power supply method for a mobile device, the currents and voltages of the power transmission coil for detecting the setting down of a mobile device are stored within a setting range. As a result, a mobile device can be distinguished from a conductive object by detecting the current and voltage of the power transmission coil. In this way, the ID signal has to be determined less frequently, and the power consumed when a mobile device is not being powered up can be reduced.

In the mobile device and power supply platform of the present invention, the alternating current power source 10 has a frequency adjusting unit 20 for changing the frequency of the alternating current supplied to the power transmission coil 5, and detecting current and/or voltage detection signals from the power transmission coil 5 to detect a set down mobile device 1. In the power supply method for a mobile device of the present invention, the frequency of the alternating current supplied to the power transmission coil 5 is changed, and a set down mobile device is detected by detecting detection signals from the power transmission coil 5.

In the mobile device, power supply platform, and power supply method for a mobile device, the frequency of the alternating current supplied to the power transmission coil is changed, and the setting down of a mobile device is determined based on the current and voltage of the power transmission coil. Thus, a mobile device with a power receiving coil can be differentiated from a conductive object without a power receiving coil. The frequency can be changed and a set down mobile device can be determined based on the current and voltage of the power transmission coil when the power receiving coil electromagnetically coupled to the power transmission coil creates a resonance circuit, and the impedance changes relative to the frequency.

In the mobile device and power supply platform of the present invention, the mobile device 1 can include a chargeable battery 3, the power supply platform 2 can be a charging platform, power can be transmitted from the power supply platform 2 to the mobile device 1, and the battery 3 in the mobile device 1 can be charged.

In the mobile device, power supply platform, and power supply method for a mobile device, the amount of power consumed when a mobile device has not been set down can be reduced and power can be saved, but a mobile device including a chargeable battery can also be quickly detected and the battery inside the mobile device reliably charged.

In the mobile device and power supply platform of the present invention, the mobile device 1 supplies power induced by the power receiving coil 4 to the transmission circuit 7, and the transmission circuit 7 is activated by the power induced by the power receiving coil 4. In the power supplying method for a mobile device of the present invention, power is induced from the power transmission coil 5 of the power supply platform 2 to the power receiving coil 4 of the mobile device 1, and ID signals are transmitted from the mobile device 1 to the power supply platform 2.

In the mobile device, power supply platform, and power supply method for a mobile device, the mobile device is activated by power induced by the power receiving coil. As a result, the mobile device does not require a power source for activating the transmission circuit. This simplifies the circuitry and reduces costs. When the mobile device includes a battery, the battery is not wasted on the transmission circuit when the mobile device has not been set on a power supply platform, and battery power consumption can be reduced when the mobile device is not in use. Also, power is not consumed by the circuitry when the power supply platform is not charging a mobile device.

### BRIEF DESCRIPTION OF THE DRAWINGS

FIG. 1 is a block diagram of the mobile device and power supply platform in an example of the present invention;
FIG. 2 is a circuit diagram of the mobile device and power supply platform shown in FIG. 1;
FIG. 3 is a block diagram of the mobile device and power supply platform in another example of the present invention; and
FIG. 4 is a block diagram of the mobile device and power supply platform in another example of the present invention.

### DETAILED DESCRIPTION OF THE INVENTION

The following is an explanation of examples of the present invention with reference to the drawings. The examples shown below exemplify the technical concepts for the mobile device, power supply platform, and power supply method for a mobile device in the present invention. The present invention is not limited to the mobile devices and power supply platforms described below, and the power supply method for a mobile device is not limited to the method described below. In order to make the claims easier to understand, the reference numbers for components in the examples have been added to the "claims" and "means of solving the problem" sections of the specification. However, the components indicated in the claims do not necessarily specify the components in the examples.

In the example of the present invention described below, the mobile device includes a chargeable battery, and the power supply platform is used as a charging platform for charging the battery in the mobile device. The mobile device containing a chargeable battery can be any electronic device operated by a battery built into the device, such as a mobile phone, a mobile music player, an IC recorder, an MP player, a radio, or a microcomputer. It can also be a battery pack.

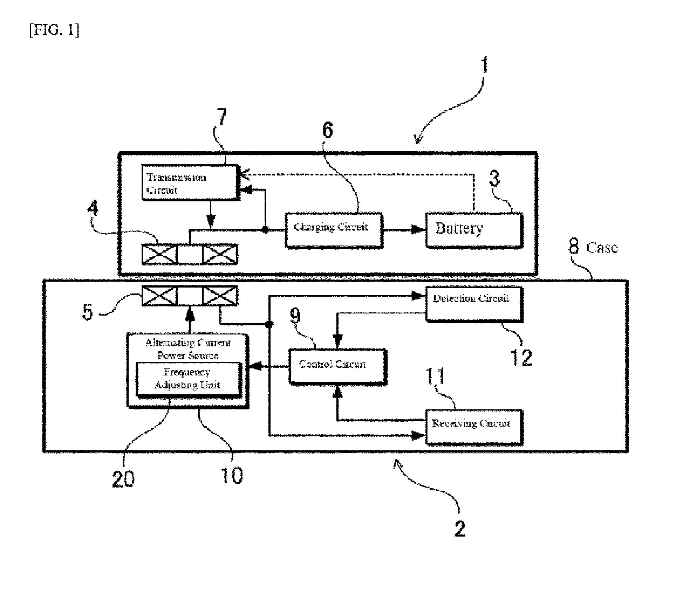

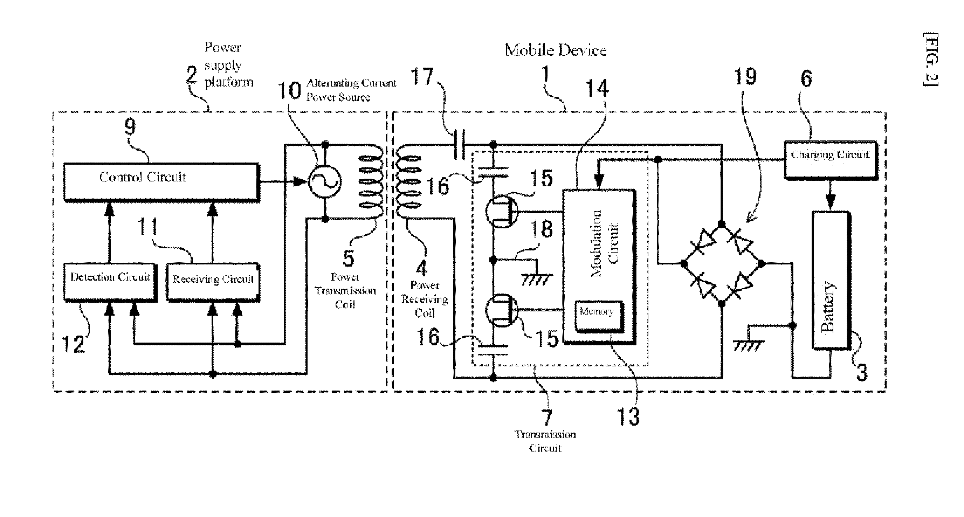

FIG. 1 is a block diagram of a mobile device 1 and a power supply platform 2. FIG. 2 is a circuit diagram of the mobile device 1 and the power supply platform 2. As shown in the drawings, the mobile device 1 has a built-in, chargeable battery 3. The mobile device 1 is removably set down, and the built-in battery 3 is charged contact-free by the power supply platform 2.

The mobile device 1 has a power receiving coil 4 for inducing the power to charge the battery 3, a charging circuit 6 for charging the battery 3 using the power induced by the power receiving coil 4, and a transmission circuit 7 for transmitting a stored ID signal to the power supply platform 2. The mobile device 1 includes a chargeable battery 3 such as a lithium ion battery, a lithium polymer battery, a nickel-metal hydride battery, or a nickel cadmium battery.

The mobile device 1 in FIG. 1 has a power receiving coil 4 arranged in horizontal fashion on the bottom of the case 8 so that the power receiving coil 4 can be arranged near the power transmission coil 5 when the mobile device 1 is set down on the power supply platform 2. The power receiving coil 4 and power transmission coil 5 are flat coils configured so that the coils can be arranged near each other, electromagnetic coupling can occur, and power can be transmitted. In the power supply platform 2, the power transmission coil 5 is arranged in horizontal fashion below the top panel on which the mobile device 1 is set down. The mobile device 1 is set down in a predetermined position on the power supply platform 2, and the power receiving coil 4 is electromagnetically coupled with the power transmission coil 5.

The transmission circuit 7 is the circuit which transmits a stored ID signal to the power supply platform 2. The transmission circuit 7 in FIG. 2 includes a modulation circuit 14 storing the ID signal in memory 13, a pair of switching elements 15 switched by the modulation circuit 14, and a capacitor 16 connected in series to each switching element 15. The series circuit composed of the capacitor 16 and switching elements 15 is connected in parallel to the power receiving coil 4 via a series capacitor 17. In this transmission circuit 7, a pair of series circuits composed of a capacitor 16 and switching elements 15 are connected in the middle to a ground line 18.

The modulation circuit 14 is activated by the power induced by the power receiving coil 4, the switching elements 15 are switched ON and OFF by the ID signal stored in the memory 13, and the ID signal is transmitted to the power supply platform 2. In the mobile device 1 shown in FIG. 2, the alternating current induced by the power receiving coil 4 is rectified by a rectifier circuit 19, and supplied to the modulation circuit 14 in the transmission circuit 7. The output from the power receiving coil 4 can be rectified by the rectifier circuit 19, the output voltage stabilized by a DC/DC converter (not shown), and the stabilized voltage supplied to the modulation circuit 14 and the charging circuit 6.

In the transmission circuit 7 of FIG. 2, the switching elements 15 are turned ON and OFF by the modulation circuit 14, and the load impedance of the power receiving coil 4 is changed. When the load impedance of the power receiving coil 4 is changed, the current and voltage of the electromagnetically coupled power transmission coil 5 changes. The receiving circuit 11 in the power transmission platform 2 detects the change in the current and voltage of the power transmission coil 5, and the ID signal is detected.

In the transmission circuit 7 of FIG. 2, the power receiving coil 4 is connected to a capacitor 16, the load impedance of the power receiving coil 4 is changed by the capacitor 16, and the ID signal is transmitted to the power supply platform 2. The transmission circuit 7 can transmit the ID signal to the power supply platform 2 via the power receiving coil 4 and the power transmission coil 5. However, the transmission circuit of the present invention is not restricted to the circuit configuration shown here. The transmission circuit can be any circuit able to transmit an ID signal to the power supply platform. For example, the power receiving coil can be connected to a battery, load resistance or coil via switching elements switched ON and OFF by the modulation circuit to change the load impedance of the power receiving coil, and wirelessly transmit the ID signal to the power supply platform.

The charging circuit 6 charges the battery 3 using power induced by the power receiving coil 4. The charging circuit 6 of FIG. 2 rectifies the alternating current induced by the power receiving coil 4 using a rectifier circuit 19 in order to convert the alternating current to direct current to charge the battery 3. The output from the power receiving coil 4 can charge the battery 3 in an ideal state by using a DC/DC converter to optimize the voltage and current in the output from the rectifier circuit 19 for charging the battery 3. The charging circuit 6 detects when the battery 3 has been fully charged, and stops the charging process. The charging circuit 6 detects when the battery 3 is fully charged, and outputs a full charge signal to the modulation circuit 14. When the modulation circuit 14 has outputted a full charge signal to the power supply platform 2, the power supply platform 2 stops the supply of alternating current power to the power transmission coil 5 based on this signal, and stops the charging of the battery 3.

The power supply platform 2 of FIG. 2 includes a case 8 having a platform section for detachably arranging the mobile device 1, a power transmission coil 5 installed in the case 8 and electromagnetically coupled to the power receiving coil 4 in the mobile device 1 set down on the platform section, an alternating current power source 10 for supplying alternating current power to the power transmission coil 5, a control circuit 9 for controlling the alternating current power source 10, a receiving circuit 11 for receiving a predetermined ID signal transmitted from the mobile device 1, and a detection circuit 12 for detecting current and/or voltage detection signals from the power transmission coil 5 while the alternating current power source 10 is temporarily supplying alternating current power to the power transmission coil 5 to determine whether or not a mobile device 1 has been arranged on the platform section.

While not shown in the drawings, the setting down section is provided on the top surface of the case so that a mobile device may be removably set down on the case. In other words, the top surface of this case is flat, and the top surface of the case serves as the setting down section for setting down a mobile device. This case, for example, can be a thick plate able to stably support a thin, rectangular mobile device on its top surface. The profile of the setting down section for setting down a mobile device can have the same profile as the mobile device. When the profile matches that of a mobile device set down on the power supply platform, the power receiving coil can be easily and reliably positioned relative to the power transmission coil to create electromagnetic coupling. However, the profile should be somewhat larger than that of the mobile device. This case not only can identify a mobile device placed on top, but can power up a mobile device with many different profiles.

The power transmission coil 5 transmits power to the electromagnetically coupled power receiving coil 4 when alternating current power is supplied from the alternating current power source 10. The power supply platform 2 including the power transmission coil 5 secured in a predetermined position inside the case 8 is configured so that the power transmission coil 5 is near the power receiving coil 4 when a mobile device 1 is set down in the predetermined position. The power transmission coil 5 can be arranged so that it can be moved inside the case 8. For example, the power transmission platform 2 can include a mechanism for detecting the position of a mobile device 1 and moving the power transmission coil 5. When a mobile device 1 is set down, the position of the mobile device 1 can be detected, and the power transmission coil 5 can be moved to the position of the mobile device 1, that is, closer to the power receiving coil 4. The mobile device 1 can then be freely placed on top of the power supply platform 2, and power transmitted from the power transmission coil 5 to the power receiving coil 4.

The alternating current power source 10 supplies 100 KHz to 1 MHz alternating current power to the power transmission coil 5. The alternating current power source 10 is controlled by the control circuit 9 to supply alternating current power to the power transmission coil 5. The alternating current power source 10 briefly supplies alternating current power to the power transmission coil 5 at a predetermined time interval when a mobile device 1 has not been set down. While alternating current power is being supplied from the alternating current power source 10 to the power transmission coil 5, the detection circuit 12 detects the current and voltage of the power transmission coil 5 in order to determine whether or not a mobile device 1 has been set down. If, for example, 200 KHz alternating current is being supplied from the alternating current power source 10 to the power transmission coil 5 and the detection circuit 12 can detect whether or not a device has been set down in ten cycles of alternating current, the brief time in which alternating current power is supplied to the power transmission coil 5 is 50 µsec. The time in which alternating current power is supplied is 15 µsec if the setting down of a device can be detected in three cycles. The cycle in which alternating current power is supplied from the alternating current power source 10 to the power transmission coil 5, that is, the period of time in which the supply of alternating current power has been stopped, ranges from 1 sec to several dozen seconds. When the time in which the supply of alternating current power has been stopped is extended, the amount of power consumed when a mobile device 1 has not been set down can be reduced. However, because the setting down of a mobile device 1 cannot be detected when the supply of alternating current power has been stopped, the cycle can be shortened to detect the setting down of a mobile device 1 more quickly.

When alternating current power is being supplied to the power transmission coil 5, the current of the power transmission coil 5 is detected as a detection signal to determine whether or not a mobile device 1 has been set down. When a mobile device 1 has been set down on the power supply platform 2, the power receiving coil 4 becomes electromagnetically coupled with the power transmission coil 5, the load of the power transmission coil 5 changes, and the current of the power transmission coil 5 changes. The current of the power transmission coil 5 when a mobile device 1 has been set down is higher than the current of the power transmission coil 5 when a mobile device 1 has not been set down. Therefore, it can be determined that a mobile device 1 has been set down when the current is greater than a set current. The setting down of a mobile device 1 can also be detected using the voltage rather than the current of the power transmission coil 5 as a detection signal. This is because the voltage of the current supplied to the power transmission coil 5 changes based on the load of the power transmission coil 5. The current increases when the power transmission coil 5 has become electromagnetically coupled with the power receiving coil 4, so the output voltage drops due to the output impedance of the alternating current power source 10. Therefore, the detection circuit 12 detects the voltage of the power transmission coil 5 as a detection signal, and the detection signal is compared to a stored setting range to determine whether a mobile device 1 has been set down. The setting down of a mobile device 1 can also be determined by detecting both the current and the voltage.

When a conductive object other than a mobile device 1 such as a coil has been set down, the detection circuit 12 determines that something has been set down based on the change in the load of the power transmission coil 5. When a conductive object other than a mobile device 1 is inadvertently set down and alternating current power is supplied to the power transmission coil 5, current is supplied to the conductive object and overheating occurs. Therefore, after the detection circuit 12 has determined that something has been set down, the control circuit 9 immediately stops the supply of alternating current power to the power transmission coil 5 to charge the battery 3. The control circuit 9 supplies alternating current power to the power transmission coil 5 to charge the battery 3 only after the receiving circuit 11 has received an ID signal and determined that a mobile device 1 has been set down.

The setting down of a mobile device 1 can also be detected by changing the frequency of the alternating current supplied from the alternating current power source 10 to the power transmission coil 5, and then detecting the current or voltage of the power transmission coil 5 relative to the frequency. As shown in FIG. 1, the power supply platform 2 includes a frequency adjusting unit 20 for changing the frequency of the alternating current supplied by the alternating current power source 10 to the power transmission coil 5. When the frequency has been changed by the frequency adjusting unit 20, the current and/or voltage of the power transmission coil 5 relative to the frequency is detected by the detection circuit 12 as the detection signal for determining whether a mobile device 1 has been set down. The detection circuit 12 stores a setting range for detection signals such as currents and voltages relative to frequencies, and compares the detected signals to this setting range to determine whether a mobile device 1 has been set down.

The receiving circuit 11 receives ID signals transmitted from mobile devices 1. The receiving circuit 11 of FIG. 2 detects the ID signal transmitted by a transmission circuit 7 from the change in the load impedance of the power transmission coil 5. Because the receiving circuit 11 receives an ID signal transmitted from a transmission circuit 7, it can also have a circuit configuration in which the mobile device transmits the ID signal wirelessly, and the receiving circuit can be a receiver for receiving ID signals transmitted wirelessly. Because the transmission circuit 7 of FIG. 2 changes the load impedance of the power receiving coil 4 to transmit ID signals, the receiving circuit 11 detects the ID signal from the change in the load impedance of the power transmission coil 5 coupled electromagnetically to the power receiving coil 4.

Because the transmission circuit 7 in the mobile device 1 of FIG. 2 is activated by power induced by the power transmission coil 5, the power supply platform 2 activates the transmission circuit 7 by supplying alternating current power to the power transmission coil 5 after a set down mobile device has been detected for a period long enough to allow the transmission circuit 7 to transmit the ID signal. The transmission circuit 7 activated by the alternating current power then transmits the ID signal. Because the transmission circuit 7 in the mobile device 1 of FIG. 2 is activated by power induced by the power receiving coil 4, power for activating the transmission circuit 7 has to be transmitted from the power transmission coil 5 to the power receiving coil 4 once the power supply platform 2 has detected a set down mobile device. Therefore, when the power supply platform 2 has detected a set down mobile device, alternating current power is supplied to the power transmission coil 5 long enough for the power transmission circuit 7 to be activated. When a set down mobile device has not been detected, alternating current power for activating the transmission circuit 7 is not supplied to the power transmission coil 5.

However, when the transmission circuit 7 is activated by the battery 3 built into the mobile device 1, alternating current power does not have to be supplied to the power transmission coil 5 to activate the transmission circuit 7 once a set down mobile device has been detected. A transmission circuit 7 activated by a battery 3 does not consume much power in sleep mode. When the mobile device 1 is set down on the power supply platform 2 and alternating current signals have been induced by the power receiving coil 4, these signals serve as trigger signals for activating the transmission circuit 7 and transmitting the ID signal to the power supply platform 2.

When a conductive object other than a mobile device 1 has been set down and detected by the detection circuit 12, an ID signal is not transmitted by the conductive object. Even though a set down object has been detected, an ID signal is not detected by the receiving circuit 11. Therefore, the control circuit 9 does not supply alternating current power to the power transmission coil 5. In other words, the alternating current power supply 10 is not activated. When an ID signal is inputted from the receiving circuit 11 after a set down object has been detected by the detection circuit 12, the control circuit 9 supplies alternating current power to the power transmission coil 5. When an ID signal is not inputted, it does not supply alternating current power to the power transmission coil 5. In other words, when an ID signal has been inputted from the receiving circuit 11 after a signal indicating the setting down of an object has been inputted from the detection circuit 12, the control circuit 9 activates the alternating current power source 10, and alternating current power is supplied to the power transmission coil 5 to charge the battery 3.

The power supply platform 2 is activated in the following way to charge the battery 3 in the mobile device 1. When a mobile device 1 has not been set down, the control circuit 9 in the power supply platform 2 briefly activates the alternating current power source 10 at a predetermined time interval to supply alternating current power to the power transmission coil 5. When the period of time in which alternating current power is supplied to the power transmission coil 5 is very short, the average power consumption of the power supply platform 2 is very low. In other words, no alternating current power is supplied to the power transmission coil 5 most of the time.

While alternating current power is briefly being supplied to the power transmission coil 5 at predetermined intervals, the detection circuit 12 detects the current or voltage of the power transmission coil 5, and compares the detected signal to a setting range to determine whether or not a mobile device 1 or a conductive object such as a coin has been set down. When a mobile device 1 or a conductive object has been set down, the current or voltage of the power transmission coil 5 changes. The detection circuit 12 compares the current or voltage detection signal from the power transmission coil 5 to the setting range to determine whether or not a mobile device 1 or conductive object has been set down. When the detection circuit 12 has not detected a set down object, the operation of briefly supplying alternating current power to the power transmission coil 5 is repeated at a predetermined time interval.

When the detection circuit 12 has detected that something has been set down, the control circuit 9 supplies alternating current power to the power transmission coil 5 to determine whether or not the receiving circuit 11 has detected an ID signal. When an ID signal has not been received, the set down object is determined to be something other than a mobile device 1 containing a chargeable battery 3. Alternating current power is not supplied to the power transmission coil 5, but the operation of briefly supplying alternating current power to the power transmission coil 5 is repeated at a predetermined time interval. When the receiving circuit 11 detects an ID signal after the detection circuit 12 has detected that something has been set down, it is determined that a mobile device 1 has been set down on the power supply platform 2. The control circuit 9 activates the alternating current power source 10, and alternating current power is supplied to the power transmission coil 5 to charge the battery 3. Power is transmitted from the power transmission coil 5 to the power receiving coil 4, and the battery 3 is charged.

When the battery 3 has been fully charged, a full charge signal is transmitted from the mobile device 1 to the power supply platform 2 or a stop charge signal is transmitted from the mobile device 1 to the power supply platform 2. When the signal has been detected, the power supply platform 2 stops the supply of alternating current power to the power transmission coil 5. Afterwards, the power supply platform 2 briefly supplies alternating current power to the power transmission coil 5 at a predetermined time interval to determine whether or not the mobile device 1 or conductive object has been removed. The power supply platform 2 determines whether the mobile device 1 or conductive object has been removed by having the detection circuit 12 compare the current or voltage detection signals from the power transmission coil 5 to the setting range. However, a remit switch can also be provided on the power supply platform, and the user can operate the remit switch so that the device can detect when a fully charged mobile device has been removed.

When a mobile device 1 with a fully charged battery 3 has been removed from the power supply platform 2, the power supply platform 2 again briefly supplies alternating current power to the power transmission coil 5 at a predetermined interval of time to detect whether or not a mobile device 1 or conductive object has been set down.

In the example described above, the mobile device is a device containing a chargeable battery, the power supply platform detects whether the mobile device has been set down, power for charging the battery is transmitted from the power transmitting coil in the power supply platform to the power receiving coil in the mobile device, and the battery inside the mobile device is charged. However, the mobile device receiving power from the power supply platform in the present invention does not have to be a mobile device containing a chargeable battery. The mobile device can be any type of device set down on a power supply platform to receive power from the platform.

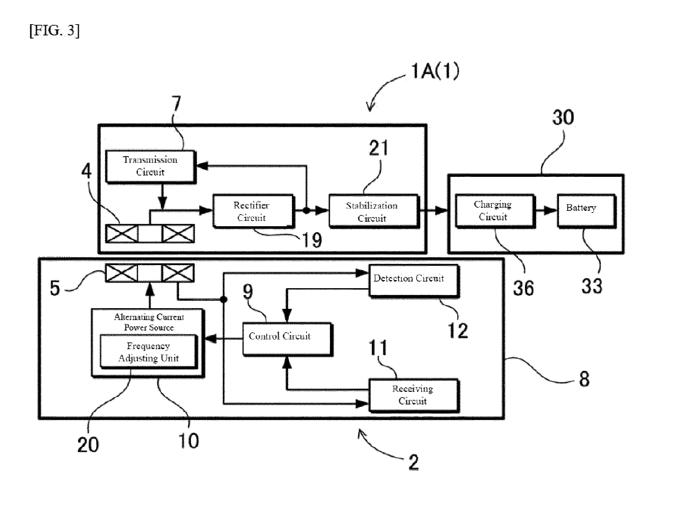

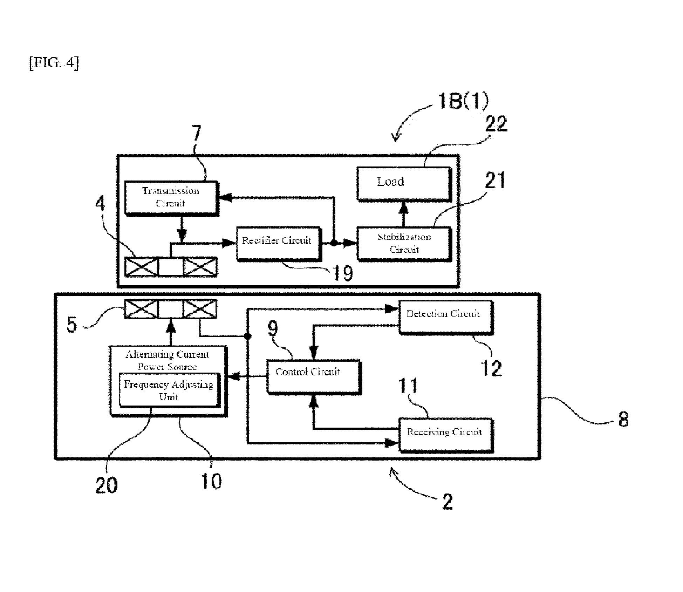

The mobile device 1 shown in FIG. 3 is a charge adaptor 1A for charging a battery 33 stored in a battery storage device 30. Alternating current power transmitted from the power supply platform 2 is converted to battery charging power and then supplied to the externally connected battery storage device 30. The power supplied by the power supply platform does not have to be used to charge a battery in a mobile device. As shown in FIG. 4, the mobile device can be a power device 1B used to power a load 22 built into a device. The power device 1B can be used to power a lighting device such as an LED using power received from the power supply platform 2, or a small fan motor using power received from the power supply platform 2. The mobile device 1 does not have to contain a battery. As in the examples mentioned above, the power transmitted from the power supply platform 2 depends on the intended use. In other words, the power supply device 2 detects when a chargeable mobile device 1 has been set down, transmits power from the power transmission coil 5 in the power supply device 2 to the power receiving coil 4 in the mobile device 1, and powers up the mobile device 1.

The mobile devices 1 shown in FIG. 3 and FIG. 4 have a rectifier circuit 19 for rectifying the alternating current transmitted from the power transmission coil 5 in the power supply platform 2 to the power receiving coil 4, and a stabilization circuit 21 such as a DC/DC converter for stabilizing the output of the rectifier circuit 19. In the case of the charge adapter 1A serving as the mobile device 1 in FIG. 3, the output from the stabilization circuit 21 is supplied to an externally connected battery storage device 30. This battery storage device 30 contains a charging circuit 36, which charges the battery 33 using power supplied from the charge adapter 1A. The power device 1B serving as the mobile device 1 in FIG. 4 is installed in a device including a load 22 such as a light source or motor, and the power outputted from the stabilization circuit 21 is supplied to the load 22 to operate the load 22.
Now that the invention has been described, what is claimed is:

## Claims

1. A mobile device and a power supply platform comprising: a mobile device (1) incorporating a power receiving coil (4) inducing transmitted alternating current using a magnetic induction effect, and a power supply platform (2) for removably setting down the mobile device (1) and transmitting power to the power receiving coil (4) of the mobile device (1);
the mobile device (1) comprising: a transmission circuit (7) for transmitting a prerecorded ID signal to the power supply platform (2); and
the power supply platform (2) comprising: a case (8) having a platform section for detachably arranging the mobile device (1), a power transmission coil (5) installed in the case (8) and electromagnetically coupled to the power receiving coil (4) in the mobile device (1) set down on the platform section, an alternating current power source (10) for supplying alternating current power to the power transmission coil (5), a control circuit (9) for controlling the alternating current power source (10), a receiving circuit (11) for receiving a predetermined ID signal transmitted from the mobile device (1), and a detection circuit (12) for detecting current and/or voltage detection signals from the power transmission coil (5) while the alternating current power source (10) is temporarily supplying alternating current power to the power transmission coil (5) to determine whether or not a mobile device (1) has been arranged on the platform section;
the control circuit (9) supplying alternating current power to the power receiving coil (4) from the power transmission coil (5) to power up the mobile device (1) when the power supply platform (2) has detected a set down mobile device (1) using the detection circuit (12) and has detected a predetermined ID signal using the receiving circuit (11).

2. A mobile device and a power supply platform according to claim 1, wherein the detection circuit (12) stores the setting range for detection signals indicating a set down mobile device, and determines whether or not a mobile device has been set down on the platform section using the setting range for detection signals.

3. A mobile device and a power supply platform according to claim 1 or claim 2,
wherein the alternating current power source (10) has a frequency adjusting unit (20) for changing the frequency of the alternating current supplied to the power transmission coil (5), and detecting current and/or voltage detection signals from the power transmission coil (5) to detect a set down mobile device (1).

4. A mobile device and a power supply platform according to any of claims 1 through 3, wherein the mobile device (1) comprises a battery (3) charged by the power induced by the power receiving coil (4) and a charging circuit (6) for charging the battery (3) using the power induced by the power receiving coil (4), and wherein the control circuit (9) supplies alternating current power to the power receiving coil (4) from the power transmission coil (5) to supply alternating current power for charging the battery (3) and to charge the battery (3) in the mobile device (1) when the power supply platform (2) has detected a set down mobile device (1) using the detection circuit (12) and has detected a predetermined ID signal using the receiving circuit (11).

5. A mobile device and a power supply platform according to any of claims 1 through 4, wherein the mobile device (1) supplies power induced by the power receiving coil (4) to the transmission circuit (7), and the transmission circuit (7) is activated by the power induced by the power receiving coil (4).

6. A power supply method for supplying power to a mobile device (1) by setting down the mobile device (1) on a power supply platform (2) and transmitting power from a power transmission coil (5) in the power supply platform (2) to a power receiving coil (4) in the mobile device (1), the power supply method comprising:
temporarily supplying alternating current power from the power supply platform (2) to the power transmission coil (5) for a predetermined period;
detecting current and/or voltage detection signals from the power transmission coil (5) while alternating current power is supplied to the power transmission coil (5);
detecting ID signals transmitted from the mobile device (1) when a set down mobile device (1) is detected based on the signal level of the detection signals; and
supplying alternating current power to the power transmission coil (5) to power up the mobile device (1) when the ID signals are detected from a set down mobile device (1).

7. A power supply method for a mobile device according to claim 6, wherein a set down mobile device (1) is detected when the current and/or voltage detection signals from the power transmission coil (5) are within a predetermined setting range.

8. A power supply method for a mobile device according to claim 6 or claim 7,
wherein the frequency of the alternating current supplied to the power transmission coil (5) is changed, and a set down mobile device is detected by detecting detection signals from the power transmission coil (5).

9. A power supply method for a mobile device according to any of claims 6 through 8, wherein the power supply method charging a battery (3) in a mobile device (1) by setting down a mobile device (1) containing a chargeable battery (3) on a power supply platform (2) and transmitting power from a power transmission coil (5) in the power supply platform (2) to a power receiving coil (4) in the mobile device (1), and wherein the power supply method comprises :
temporarily supplying alternating current power from the power supply platform (2) to the power transmission coil (5) for a predetermined period;
detecting current and/or voltage detection signals from the power transmission coil (5) while alternating current power is supplied to the power transmission coil (5);
detecting ID signals transmitted from the mobile device (1) when a set down mobile device (1) is detected based on the signal level of the detection signals; and
supplying alternating current power to the power transmission coil (5) for charging the battery (3) in the mobile device (1) to charge the battery (3) when the ID signals are detected from a set down mobile device (1).

10. A power supply method for a mobile device according to any of claims 6 through 9, wherein power is induced from the power transmission coil (5) of the power supply platform (2) to the power receiving coil (4) of the mobile device (1), and ID signals are transmitted from the mobile device (1) to the power supply platform (2).
